# FASCICULE DE BREVET EUROPEEN

(11) **EP 2 822 842 B1**
(45) Date de publication et mention de la délivrance du brevet: **14.09.2016**
(21) Numéro de dépôt: 13720060.6
(22) Date de dépôt: 08.03.2013
(51) Int. Cl.: B62D 61/12

(54) **REMORQUE ROUTIÈRE À TRAIN DE ROULAGE SECONDAIRE ORIENTABLE**
STRASSENSCHLEPPER MIT VERSTELLBAREM SEKUNDÄREM RADSATZ
ROAD TRAILER WITH ORIENTABLE SECONDARY WHEELSET

(30) Priorité: 09.03.2012 FR 1252169
(43) Date de publication de la demande: 14.01.2015
(73) Titulaire: Segard, Jean-Baptiste, 78100 Saint Germain en Laye (FR)
(72) Inventeur: Segard, Jean-Baptiste, 78100 Saint Germain en Laye (FR)
(74) Mandataire: Cabinet Poncet
(86) Numéro de dépôt international: PCT/IB2013/051864
(87) Numéro de publication internationale: WO 2013/132468

(56) Documents cités:
- US-A- 2 433 269
- US-A- 2 662 781
- US-A- 2 717 787
- US-A- 2 764 424
- US-A- 4 383 698
- US-A- 4 589 670
- US-A1- 2010 032 923

## Description

### DOMAINE TECHNIQUE DE L'INVENTION

La présente invention concerne les dispositifs permettant de manoeuvrer aisément en marche arrière un véhicule tracteur auquel est attelée une remorque.

Lorsqu'une remorque est attelée à un véhicule tracteur, la remorque est articulée en orientation et suit généralement sans difficulté le véhicule tracteur lorsque ce dernier se déplace dans la direction d'avance normale.

Par contre, lorsque le véhicule tracteur recule, l'articulation de la remorque vis-à-vis du véhicule tracteur complique la manoeuvre, et nécessite un apprentissage particulier de la conduite, de type conduite de camion semi-remorque, avec contre-braquage pour amorcer les changements d'orientation, et avec contrôle du braquage pour éviter une mise en portefeuille.

De nombreux utilisateurs n'ont pas reçu cet apprentissage, de sorte que la conduite en marche arrière leur est difficile.

Cette difficulté se présente par exemple si l'on veut atteler à un véhicule tracteur à propulsion électrique une remorque sur laquelle est embarquée une source auxiliaire de production d'énergie électrique permettant d'augmenter l'autonomie du véhicule. Une telle application d'une remorque est décrite par exemple dans le document WO 2011/031916 A2. Ce document ne décrit aucune solution permettant de faciliter la manoeuvre de l'attelage en marche arrière.

On a déjà proposé, dans le document FR 2 831 512, de verrouiller le système d'attelage d'un tracteur par rapport à sa semi-remorque lors d'une marche arrière. Cette solution est satisfaisante lors d'une marche arrière en ligne droite, mais ne convient pas lors d'une marche arrière en virage.

Dans le document WO 00/56588, on a proposé une remorque dans laquelle l'attelage peut être bloqué dans l'axe du véhicule tracteur et les roues de la remorque peuvent être libérées en direction, lors d'une marche arrière. En marche avant, il est nécessaire de bloquer de façon certaine les roues en direction, et de débloquer l'attelage pour permettre le pivotement en virage. Mais cette solution présente le danger d'un blocage défectueux en marche avant, qui conduit à un comportement anormal et dangereux du véhicule et de la remorque lors des virages.

Les documents US 4,383,698 A, dont la description est prise à base du préambule de la revendication 1, US 2,433,269 A, US 2,662,781 A et US 2,717,787 A décrivent d'autres structures de remorque routière comportant un train de roulage postérieur à orientation axiale fixe et un train de roulage antérieur orientable par des moyens de liaison à un véhicule tracteur. Ces remorques reposent en permanence sur le sol par leurs deux trains de roulage, et ne facilitent pas la manoeuvre de l'attelage en marche arrière.

Le document US 4,589,670 A décrit également une remorque routière à train de roulage postérieur à orientation fixe et train de roulage antérieur orientable, le train de roulage antérieur étant en outre relevable. La remorque repose ainsi sur le sol soit par ses deux trains de roulage, soit par son seul train de roulage postérieur à orientation fixe, ce qui ne facilite pas les manoeuvres de recul.

Le document US 2010/0032923 A1 décrit une semi-remorque munie d'un train de roulage secondaire escamotable entre une position escamotée et une position déployée. En position déployée, les roues du train de roulage secondaire portent la semi-remorque, et sont soit disposées en ligne selon une orientation transversale, soit disposées selon un angle fixe de 1 à 30° par rapport au plan arrière de la remorque. Les roues du train de roulage secondaire, motorisées et orientées de façon fixe et perpendiculairement au sens de progression du véhicule tracteur, permettent de repositionner la semi-remorque par un déplacement latéral. Il n'est ni prévu ni possible de faciliter les manoeuvres de recul.

### EXPOSE DE L'INVENTION

Le problème proposé par l'invention est de concevoir une nouvelle structure de remorque d'attelage qui facilite le déplacement en marche arrière, sans nécessité de contre-braquage, et sans risque de laisser la remorque s'écarter de la trajectoire du véhicule et se mettre en portefeuille.

En particulier, l'invention vise à permettre des manoeuvres en marche arrière dans les cas de remorques compactes qui ne sont pas ou peu visibles du conducteur depuis le poste de conduite du véhicule tracteur.

Simultanément, l'invention vise à conserver la stabilité de comportement d'une structure habituelle de remorque en marche avant.

Pour atteindre ces buts ainsi que d'autres, l'invention propose une remorque routière selon la revendication 1.

De la sorte, en marche avant, on utilise la remorque en roulement sur son seul train de roulage principal, présentant le comportement habituel satisfaisant d'une remorque classique. En marche arrière, on utilise le seul train de roulage secondaire qui, par les moyens d'orientation, provoque le déplacement de la remorque dans la direction souhaitée pour conserver un alignement satisfaisant entre le véhicule tracteur et la remorque, évitant tout risque que la remorque s'écarte de la trajectoire du véhicule tracteur et se mette en portefeuille. Il n'est alors pas nécessaire d'effectuer un contre-braquage pour amorcer les changements d'orientation en marche arrière.

Selon cette combinaison, la remorque est dotée de deux dispositifs de roulage distincts. Le train de roulage principal peut comporter un ou plusieurs essieux, de préférence à axe de rotation fixe, et est utilisé en marche avant. Le train de roulage secondaire, orientable en direction, est utilisé en marche arrière. En marche avant, le train de roulage principal repose sur le sol, et le train de roulage secondaire est escamoté à l'écart du sol. En marche arrière, le train de roulage secondaire repose sur le sol, et le train de roulage principal est au moins légèrement à l'écart du sol, ses roues étant légèrement décollées du sol. La direction prise par la remorque et l'orientation du train de roulage secondaire sont alors liées.

Chaque train de roulage a ainsi une fonction unique, et peut être dimensionné en fonction de son usage propre.

Ainsi, en marche avant, la vitesse peut être élevée et nécessite une bonne tenue de route, assurée par le train de roulage principal.

En marche arrière, les vitesses et distances parcourues sont faibles, mais l'angle de braquage peut être important, et il n'y a pas besoin de suspensions pour le train de roulage secondaire.

Le fait de prévoir deux trains de roulage distincts réduit grandement le risque d'accident lié à une panne ou à un défaut imprévu du système. En effet, en marche avant, la remorque est fondamentalement une remorque tout à fait classique. Un avantage est que le train de roulage secondaire peut être constitué de composants très économiques, car il est utilisé à des vitesses faibles et sur de courtes distances.

De préférence, le train de roulage principal est à hauteur fixe vis-à-vis du châssis, tandis que les moyens d'escamotage sont adaptés pour déplacer le train de roulage secondaire entre une position escamotée vers la partie supérieure du châssis, dans laquelle la remorque repose sur le sol par le train de roulage principal, et une position déployée à l'écart de la partie supérieure du châssis, dans laquelle la remorque repose sur le sol par le train de roulage secondaire tandis que le train de roulage principal est à l'écart du sol.

De cette façon, on conserve la structure normale d'une remorque routière, et sa capacité de roulage stable en marche avant sur son train de roulage principal.

Selon un premier mode de réalisation, pour réaliser les moyens d'orientation, c'est-à-dire pour orienter en direction le train de roulage secondaire :
- le dispositif d'attelage comprend des moyens limitant l'écart angulaire entre la direction longitudinale de la remorque et la direction longitudinale du véhicule tracteur,
- le train de roulage secondaire est constitué d'une ou plusieurs roues folles en direction, aptes à suivre la direction imprimée à la remorque routière par le dispositif d'attelage accroché au véhicule tracteur.

Ce mode de réalisation est particulièrement simple et peu onéreux, les roues folles en direction constituant une structure particulièrement simple et habituelle, par exemple telle que celles utilisées dans les chariots de supermarché.

De façon également simple, les moyens limitant l'écart angulaire peuvent comprendre un ou plusieurs mors de serrage aptes à porter en appui contre une boule d'attelage prévue sur le véhicule tracteur. Le serrage induit un frottement, c'est-à-dire un couple de freinage en orientation angulaire entre l'attelage et le véhicule tracteur, produisant une limitation suffisante d'écart angulaire.

En alternative, les moyens limitant l'écart angulaire peuvent comprendre des moyens de verrouillage pour verrouiller sélectivement l'écart angulaire du dispositif d'attelage vis-à-vis du véhicule tracteur.

Par suite du verrouillage ou du freinage de l'écart angulaire, la trajectoire de la remorque est déterminée par celle du véhicule tracteur, dans la mesure où les roues folles en direction permettent à la remorque de suivre librement cette trajectoire.

Selon un second mode de réalisation, pour réaliser les moyens d'orientation, c'est-à-dire pour orienter en direction le train de roulage secondaire :
- le train de roulage secondaire est constitué de roues orientables en direction,
- des moyens d'actionnement commandent l'orientation des roues orientables vis-à-vis du châssis de la remorque routière en fonction de l'écart angulaire entre la direction longitudinale du véhicule tracteur et la direction longitudinale de la remorque.

Ce mode de réalisation est plus fiable et efficace pour effectuer des marches arrières, notamment sur sol inégal ou en dévers, susceptible d'appliquer des efforts transversaux sur le train de roulage secondaire.

Dans ce cas, les moyens d'actionnement peuvent orienter les roues du train de roulage secondaire selon un angle de braquage tendant à ramener la remorque dans l'axe du véhicule tracteur.

En pratique, les moyens d'actionnement peuvent comprendre des câbles ou bielles dont une extrémité antérieure est articulée sur le véhicule tracteur et dont une extrémité postérieure est articulée sur un support commun orientable des roues du train de roulage secondaire.

En alternative, les moyens d'actionnement peuvent comprendre des câbles ou bielles dont une extrémité antérieure est articulée sur le véhicule tracteur et dont une extrémité postérieure est articulée sur une plaque rotative sollicitant une barre transversale de direction reliée par des bielles aux roues du train de roulage secondaire.

Dans tous les modes de réalisation, les moyens d'escamotage peuvent comprendre :
- au moins un vérin apte à déplacer sélectivement l'un au moins du train de roulage principal et du train de roulage secondaire,
- des moyens de commande de vérin, pour actionner le vérin et faire reposer la remorque sur le sol par le seul train de roulage secondaire lorsque le véhicule tracteur recule, et pour actionner le vérin et faire reposer la remorque sur le sol par le seul train de roulage principal lorsque le véhicule tracteur avance.

Les moyens de commande de vérin peuvent être des moyens de commande manuels, par exemple une manivelle. De préférence, les moyens de commande de vérin peuvent être des moyens motorisés, pilotés par un capteur détectant l'allure du véhicule tracteur, c'est-à-dire le fait qu'il avance ou qu'il recule, ou le fait qu'il s'apprête à avancer ou à reculer.

Selon un mode de réalisation de l'invention, on peut profiter de la présence de deux trains de roulage pour assurer une stabilité de la remorque routière entreposée à l'arrêt sans véhicule tracteur. Pour cela, on peut prévoir des moyens de verrouillage de train pour verrouiller sélectivement les moyens d'escamotage en une position intermédiaire dans laquelle le train de roulage principal et le train de roulage secondaire sont au même niveau pour supporter simultanément la remorque routière sur le sol, les trains de roulage principal et secondaire étant décalés l'un de l'autre dans la direction longitudinale de la remorque routière.

Selon une réalisation avantageuse, une remorque routière selon l'invention peut comprendre des moyens de génération ou de stockage d'électricité aptes à être eux-mêmes connectés à un véhicule tracteur à propulsion électrique, pour alimenter en énergie électrique le véhicule tracteur et accroître ainsi son autonomie.

Dans ce cas, on peut aisément atteler une remorque d'alimentation en énergie électrique, pour accroitre l'autonomie d'un véhicule tracteur, sans que le conducteur ait besoin d'avoir des connaissances particulières de conduite en marche arrière avec remorque articulée.

Selon un autre aspect, l'invention propose l'utilisation d'une remorque routière telle que définie ci-dessus avec un véhicule tracteur, dans laquelle :
- lorsque le véhicule tracteur est en marche avant, on sollicite les moyens d'escamotage pour placer les trains de roulage principal et secondaire en première position de façon que la remorque routière repose sur le sol par son seul train de roulage principal,
- lorsque le véhicule tracteur est en marche arrière, on sollicite les moyens d'escamotage pour placer les trains de roulage principal et secondaire en seconde position de façon que la remorque routière repose sur le sol par son seul train de roulage secondaire.

Dans une telle utilisation, on peut en outre prévoir que le véhicule tracteur comprend des moyens de propulsion électriques, et la remorque routière comprend des moyens de génération ou de stockage d'électricité connectés au véhicule tracteur et alimentant les moyens de propulsion électriques pour accroître son autonomie.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique de dessous d'une remorque selon un mode de réalisation de la présente invention, la remorque étant déviée latéralement par rapport au véhicule tracteur ;
- la figure 2 est une vue schématique de côté de la remorque de la figure 1, en position de fonctionnement du train de roulage secondaire ;
- la figure 3 illustre schématiquement en vue de face un mode de réalisation du train de roulage secondaire et de ses moyens de liaison au châssis de la remorque ;
- la figure 4 est une vue schématique de dessous d'une remorque selon un second mode de réalisation de la présente invention, en position déviée latéralement par rapport au véhicule tracteur ;
- la figure 5 est une vue de côté schématique illustrant la remorque de la figure 4, le train de roulage secondaire étant en fonctionnement ;
- la figure 6 illustre schématiquement en vue de face le train de roulage secondaire de la remorque des figures 4 et 5 ;
- la figure 7 illustre schématiquement en vue de côté un train de roulage secondaire selon une variante du mode de réalisation des figures 4 à 6 ;
- la figure 8 est une vue de dessous illustrant schématiquement une remorque selon un autre mode de réalisation de la présente invention ;
- la figure 9 est une vue de côté illustrant schématiquement la remorque de la figure 8, le train de roulage secondaire étant en fonctionnement ;
- la figure 10 est une vue de face illustrant schématiquement le train de roulage secondaire de la figure 9 ;
- les figures 11 et 12 illustrent respectivement, en vue d'arrière et en vue de dessus schématique, une remorque selon un mode de réalisation à roues orientables individuellement du train de roulage secondaire ;
- la figure 13 illustre schématiquement, en vue de dessus, une remorque selon un mode de réalisation simplifié de la présente invention ; et
- la figure 14 illustre en vue de côté la remorque de la figure 11, le train de roulage secondaire étant en fonctionnement.

### DESCRIPTION DES MODES DE REALISATION PREFERES

Dans tous les modes de réalisation illustrés sur les figures, une remorque routière 1 selon l'invention comprend, de façon connue, un châssis de remorque 2, un train de roulage principal 3, et un dispositif d'attelage 4 pour son accrochage à un véhicule tracteur 5.

Dans ces modes de réalisation, il s'agit de remorques 1 dont le train de roulage principal 3 comporte deux roues principales 3a et 3b montées en bout d'un essieu principal 3c transversal disposé en position intermédiaire sous le châssis 2 de la remorque 1.

Le dispositif d'attelage 4 est solidaire du châssis 2 selon son extrémité postérieure 4a, tandis que son extrémité antérieure 4b est adaptée pour s'articuler au véhicule tracteur 5 de façon de connue. Par exemple, l'extrémité antérieure 4b du dispositif d'attelage 4 peut comporter un logement inférieur venant coopérer avec une boule d'attelage montée à l'arrière du véhicule tracteur 5.

Comme cela est habituel, le dispositif d'attelage 4 peut par exemple avoir la forme d'une poutre longitudinale ou timon d'attelage.

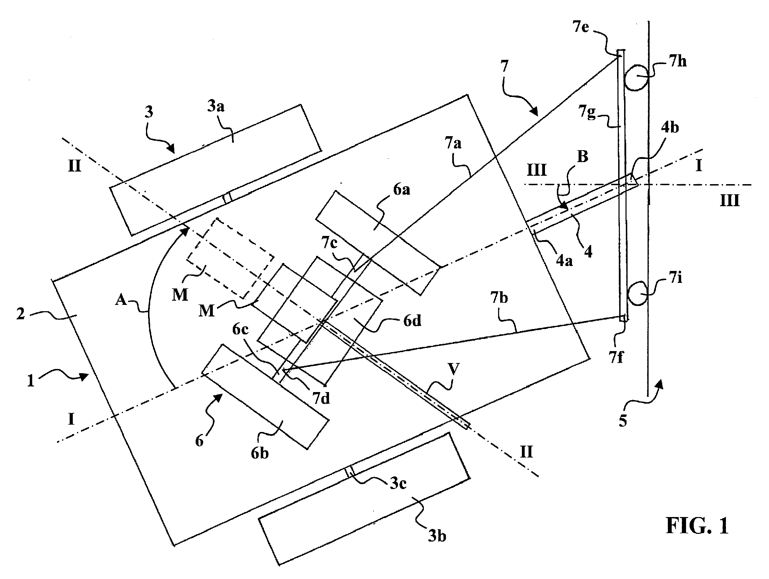

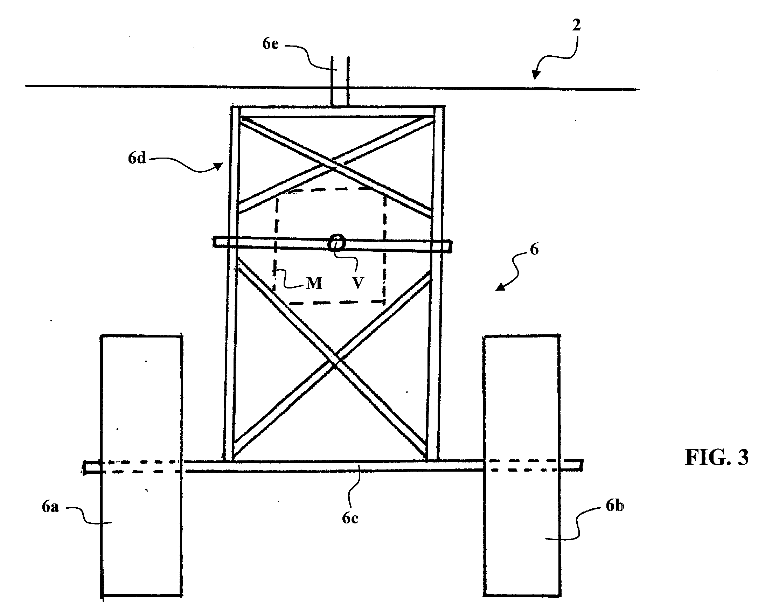

Comme on le voit sur la figure 1 en vue de dessous, la remorque routière 1 selon l'invention comprend en outre un train de roulage secondaire 6. Ce train de roulage secondaire 6, dans le mode de réalisation de cette figure, comprend 2 roues secondaires 6a et 6b coaxiales montées en bout d'un essieu secondaire 6c lui-même monté sur un châssis secondaire 6d, mieux visible sur la vue de face de la figure 3. Le châssis secondaire 6d est lui-même monté à pivotement libre sous le châssis 2 par une cheville ouvrière 6e ou axe de pivotement vertical.

Le châssis secondaire 6d est déformable pour assurer le déplacement sélectif du train de roulage secondaire 6 vers et à l'écart du châssis 2 de la remorque 1.

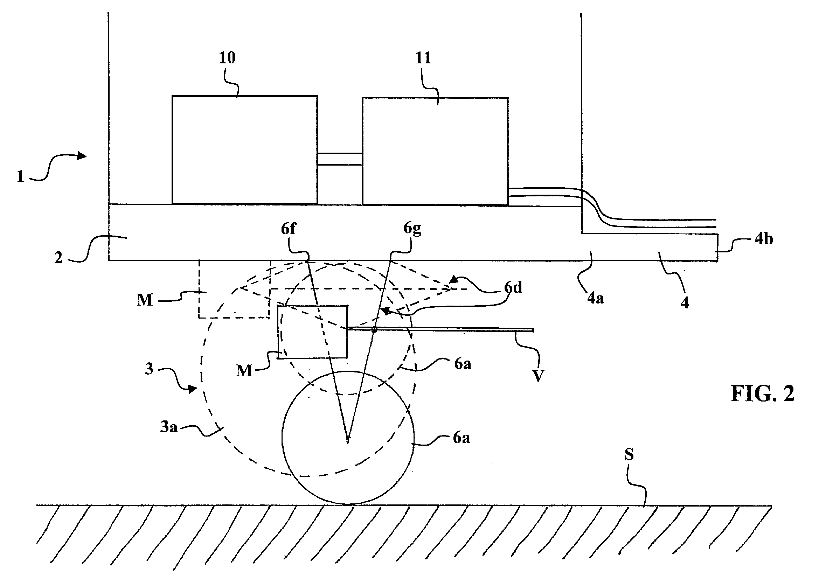

Sur la figure 2, en vue de côté, on a illustré les deux positions extrêmes du train de roulage secondaire 6, à savoir : une position escamotée vers la partie supérieure du châssis 2, illustrée en pointillés, dans laquelle la roue secondaire 6a est écartée du sol S et la remorque 1 peut reposer sur le sol S par la roue principale 3a ; et une position déployée à l'écart de la partie supérieure du châssis 2, illustrée en traits pleins, dans laquelle la roue secondaire 6a est à l'écart du châssis 2 et repose sur le sol S tandis que la roue principale 3a est à l'écart du sol S.

En pratique, dans ce mode de réalisation, le châssis secondaire 6d est une structure à parallélogramme déformable, articulé sous le châssis 2 selon des articulations 6f et 6g, et dont les branches sont sollicitées par un moteur M sollicitant une vis V pour faire passer le train de roulage secondaire 6 de la position escamotée à la position déployée et réciproquement.

En fonctionnement normal en marche avant, la remorque 1 étant attelée à un véhicule tracteur 5, le train secondaire 6 est en position escamotée, et la remorque repose sur le sol S normalement par son train de roulage principal 3, constituant une remorque 1 dont le fonctionnement est habituel et présente la stabilité désirée.

Pour faciliter les manoeuvres de recul, on actionne le moteur M qui place le train secondaire 6 en position déployée, la remorque 1 reposant alors sur le sol S par le seul train secondaire 6. Dans ce cas, il faut que les roues secondaires 6a et 6b prennent une direction appropriée conforme à la direction que prend le véhicule tracteur 5, sans risque que la remorque 1 s'écarte de la direction longitudinale III-III du véhicule tracteur 5.

Pour cela, des moyens d'orientation permettent d'orienter en direction le train de roulage secondaire 6 en fonction de la trajectoire de recul du véhicule tracteur 5.

Dans le mode de réalisation de la figure 1, les moyens d'orientation pour orienter en direction le train de roulage secondaire 6 comprennent d'une part le fait que le châssis secondaire 6d qui porte le train de roulage secondaire 6 est articulé autour de la cheville ouvrière ou axe de pivotement vertical 6e de sorte que les roues secondaires 6a et 6b sont orientables en direction ; et les moyens d'orientation comprennent d'autre part des moyens d'actionnement 7 pour commander cette orientation.

En pratique, dans cette réalisation, les moyens d'actionnement 7 comprennent deux bielles ou câbles 7a et 7b, articulés à leurs extrémités postérieures 7c et 7d respectives sur le châssis secondaire 6d de part et d'autre et à égales distances de l'axe longitudinal II-II du châssis secondaire 6d, et articulés à leurs autres extrémités antérieures 7e et 7f respectives à une traverse 7g destinée à être rendue fixe par rapport au véhicule tracteur 5. Par exemple, la traverse 7g peut être fixée au véhicule tracteur 5, ou elle peut être articulée en son centre au dispositif d'attelage 4 et en appui contre la paroi postérieure du véhicule tracteur 5 avec interposition de butées élastiques 7h et 7i.

Les extrémités antérieures 7e et 7f des bielles ou câbles 7a et 7b sont avantageusement plus écartées l'une de l'autre que les extrémités postérieures 7c et 7d. De la sorte, on réalise une sorte d'amplification du braquage des roues secondaires 6a et 6b, dans le sens recherché par la présente invention, c'est-à-dire le sens qui ramène la remorque 1 dans l'axe du véhicule tracteur 5.

Le fonctionnement en marche arrière est le suivant : lorsque la remorque 1 est angulairement déportée à l'écart de l'axe du véhicule tracteur 5, c'est-à-dire lorsque l'axe longitudinal I-I de la remorque 1 fait un angle B non nul avec l'axe longitudinal III-III du véhicule tracteur 5, les bielles ou câbles 7a et 7b font pivoter le train de roulage secondaire 6 comme illustré sur la figure 1. De cette façon, lorsque le véhicule tracteur 5 recule, le train de roulage secondaire 6 tend immédiatement à ramener la remorque 1 dans l'axe III-III du véhicule tracteur 5. De la sorte, quelle que soit la trajectoire que va prendre le véhicule tracteur 5 en marche arrière, le train de roulage secondaire 6 et les moyens d'actionnement 7 vont permettre de mettre la remorque 1 dans une trajectoire compatible avec celle du véhicule tracteur 5, évitant l'apparition d'un angle B important entre l'axe I-I de la remorque 1 et l'axe III-III du véhicule tracteur 5. Le conducteur du véhicule tracteur 5 n'a donc pas à se préoccuper de la remorque 1, et il peut effectuer des manoeuvres habituelles sans contre-braquage et sans risquer une mise en portefeuille de la remorque 1 par rapport au véhicule tracteur 5.

Pour repartir en marche avant, on provoque la rotation du moteur M, qui escamote le train de roulage secondaire 6, de façon que la remorque 1 repose sur le sol S par le seul train de roulage principal 3.

L'orientation du train de roulage secondaire 6 est constamment effectuée, même lorsque le train de roulage secondaire 6 est en position escamotée. De cette manière, lorsqu'on abaisse le train de roulage secondaire 6 pour entreprendre une marche arrière, les roues secondaires 6a et 6b du train de roulage secondaire 6 sont immédiatement orientées dans la direction appropriée dès le début de manoeuvre en marche arrière.

Les moyens d'actionnement 7 orientent le train de roulage secondaire 6 de façon que son axe longitudinal II-II fasse avec l'axe longitudinal I-I de la remorque un angle A qui est fonction de l'angle B entre l'axe longitudinal III-III du véhicule tracteur 5 et l'axe longitudinal I-I de la remorque 1. L'angle A est croissant en valeur absolue en fonction de la valeur absolue de l'angle B, et il est en sens inverse de l'angle B. Par exemple, sur la figure 1, l'angle B est dans le sens inverse des aiguilles d'une montre, tandis que l'angle A est dans le sens des aiguilles d'une montre.

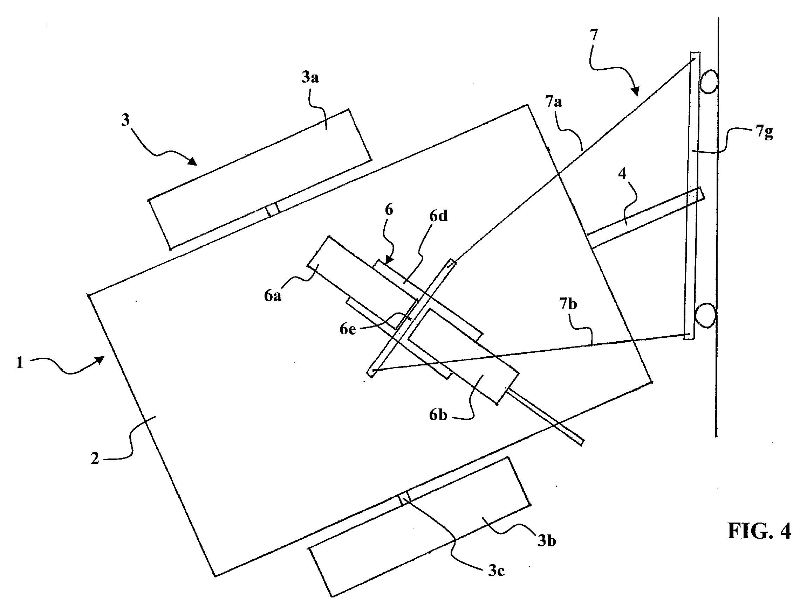

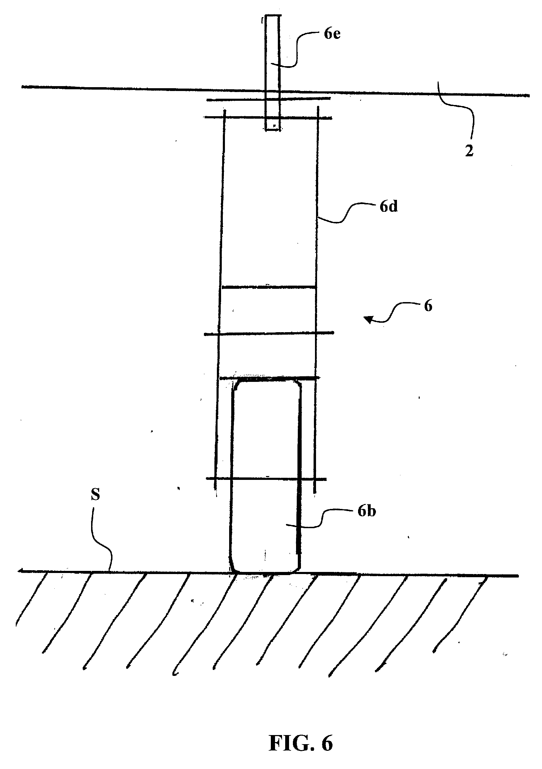

Considérons maintenant le mode de réalisation illustré sur les figures 4 à 6.

Dans ce mode de réalisation, on retrouve la même structure de remorque routière 1, avec un châssis 2, un train de roulage principal 3 à deux roues principales 3a et 3b en bout d'un essieu principal 3c, et avec un dispositif d'attelage 4 fixe sur le châssis 2.

On retrouve également un train de roulage secondaire 6, et des moyens d'actionnement 7 à bielles ou câbles 7a et 7b à traverse 7g.

Le train de roulage secondaire 6 comporte également un châssis secondaire 6d, articulé en pivotement libre autour d'une cheville ouvrière 6e.

Une différence est que, dans ce second mode de réalisation, les roues secondaires 6a et 6b sont alignées en tandem, offrant un meilleur pouvoir directionnel.

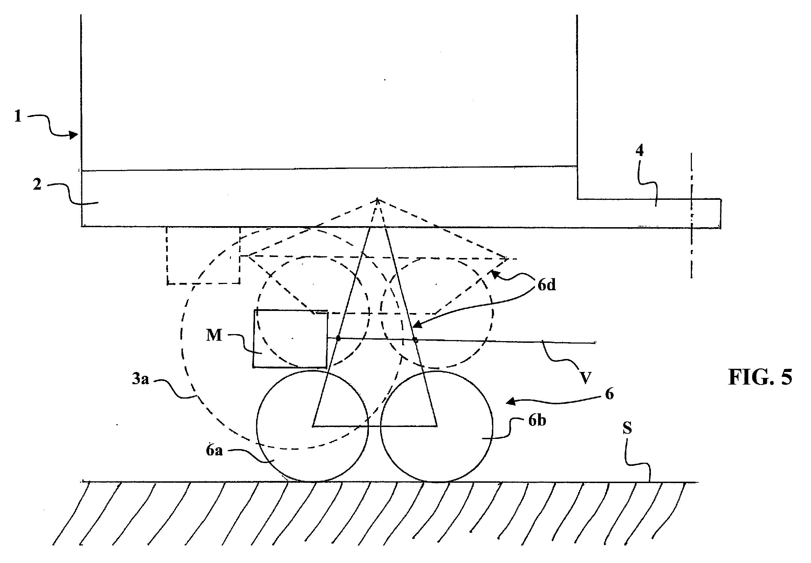

Le châssis secondaire 6d est également déformable, pour rétracter ou déployer le train de roulage secondaire 6 au moyen d'un moteur M et d'une vis V, mieux visibles sur la figure 5.

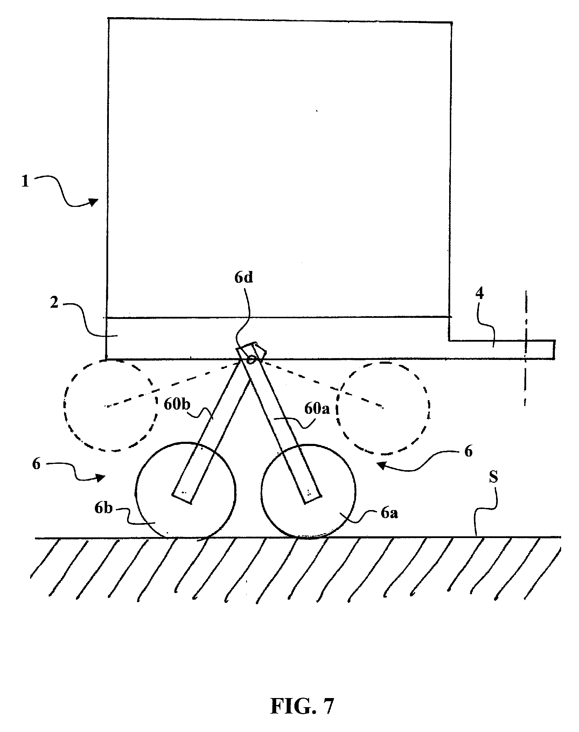

Sur la figure 7, on a illustré une variante du mode de réalisation précédent, dans lequel les roues secondaires 6a et 6b sont coplanaires en tandem.

Dans ce cas, les roues 6a et 6b sont portées par des bielles 60a ou 60b respectives qui sont articulées sur le châssis secondaire 6d pour s'incliner dans le plan vertical longitudinal de la remorque 1 entre les positions escamotée (en pointillés) et déployée (en traits pleins) du train de roulage secondaire 6.

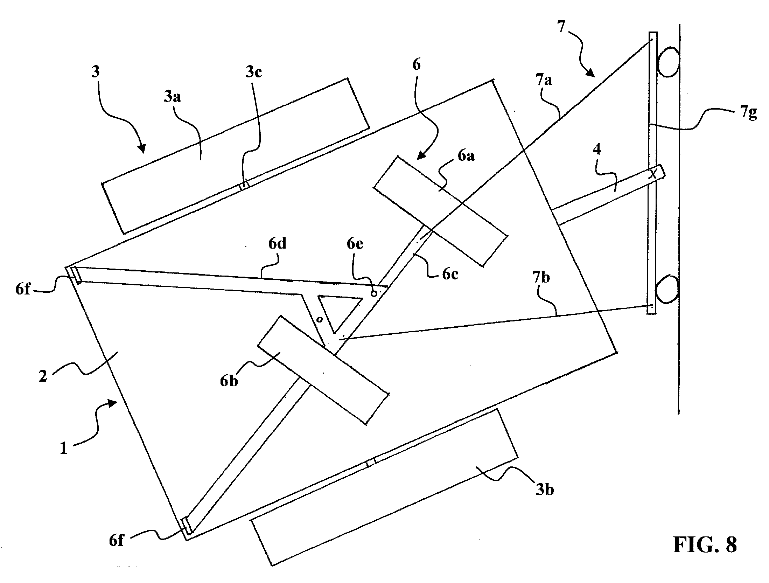

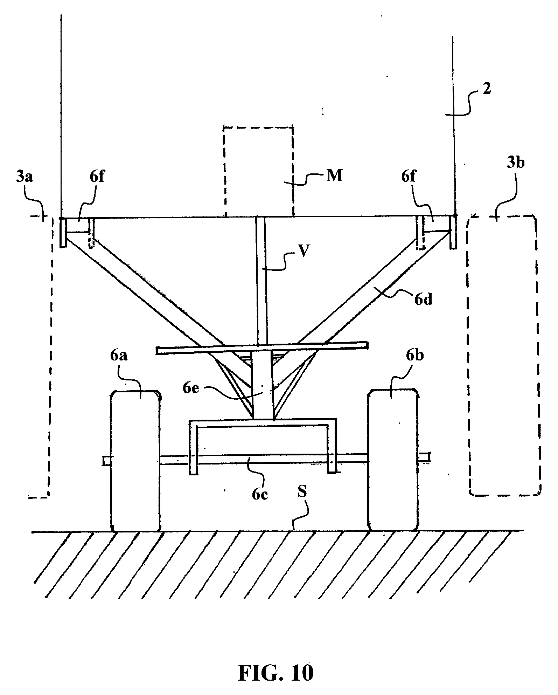

Considérons maintenant le mode de réalisation illustré sur les figures 8, 9 et 10.

Dans ce mode de réalisation, on retrouve la même structure de remorque 1, avec le châssis 2, un dispositif d'attelage 4 fixe sur le châssis 2, un train de roulage principal 3 à deux roues principales 3a et 3b sur un essieu principal 3c.

On retrouve également un train de roulage secondaire 6, à deux roues secondaires coaxiales 6a et 6b au bout d'un essieu secondaire 6c.

Dans ce cas, l'essieu secondaire 6c est monté orientable autour d'une cheville ouvrière 6e sur le châssis secondaire 6d. Le châssis secondaire 6d, dans ce cas, n'est pas monté pivotant en direction vis-à-vis du châssis 2, mais il est monté pivotant en inclinaison sous le châssis 2 autour d'un axe transversal postérieur 6f. En pratique, le châssis secondaire 6d est en triangle, avec son sommet portant la cheville ouvrière 6e et sa base articulée selon l'axe transversal postérieur 6f.

Les moyens d'actionnement 7 sont similaires à ceux du mode de réalisation de la figure 1, à savoir des bielles ou câbles 7a et 7b, une traverse 7g. Le fonctionnement est similaire à celui du mode de réalisation de la figure 1.

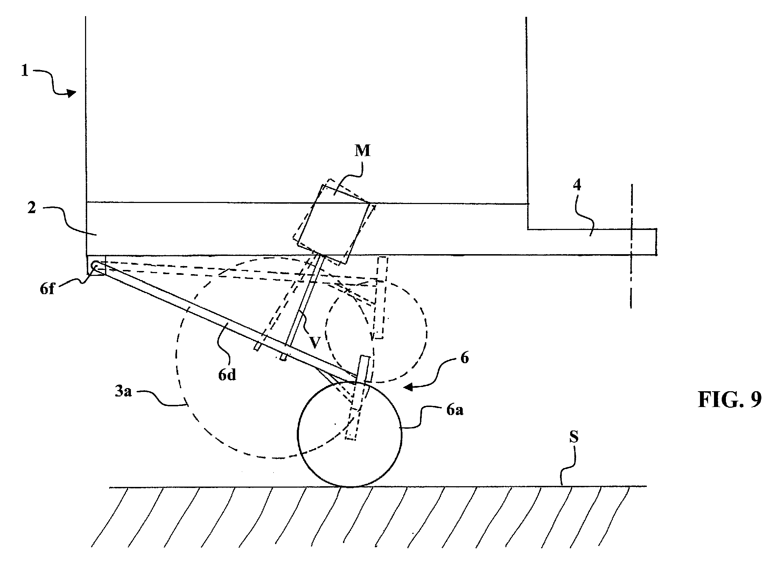

Pour les mouvements du train de roulage secondaire 6 entre les positions escamotée et déployée, comme on le voit sur la figure 9, un moteur ou vérin M agit sur le châssis secondaire 6d pour régler son inclinaison autour de l'axe transversal postérieur 6f. La figure 9 illustre la position escamotée en pointillés et la position déployée en traits pleins.

Selon une variante du mode de réalisation des figures 8 à 10, le châssis secondaire 6d peut être articulé non pas selon un axe transversal postérieur 6f, mais autour de l'essieu transversal 3c. De la sorte, dans le cas d'une remorque 1 courte, on pourra avantageusement placer les roues secondaires 6a et 6b de telle sorte qu'en position escamotée elles se trouvent en avant du châssis 2 de part et d'autre du dispositif d'attelage 4. En position déployée, les roues 6a et 6b peuvent se trouver au même niveau que l'essieu principal 3c, le châssis secondaire 6d étant dressé à la verticale. Dans cette variante, il est préférable que les moyens d'actionnement soient des câbles 7a et 7b, qui se détendent lorsque le train de roulage secondaire 6 est en position escamotée, et qui se tendent et orientent les roues 6a et 6b lorsque le train de roulage secondaire 6 vient en position déployée.

Dans les modes de réalisation des figures 1 à 10, le train de roulage secondaire 6 est « actif », c'est-à-dire qu'il prend de façon active une direction par rapport à l'axe de la remorque routière 1, par rotation pilotée autour de la cheville ouvrière 6e. Lorsque la cheville ouvrière 6e est un axe vertical, c'est-à-dire perpendiculaire au plan horizontal moyen de la remorque 1, et se trouve donc généralement perpendiculaire au sol S, un pivotement du train de roulage secondaire 6 garde les deux roues coaxiales 6a et 6b en appui égal sur le sol S.

En variante, on peut incliner la cheville ouvrière 6e de quelques degrés vers l'avant, de façon que sa partie supérieure soit plus avancée que sa partie inférieure. De la sorte, lors d'un pivotement du train de roulage secondaire 6, la roue 6a ou 6b la plus en avant s'abaisse et supporte une charge supérieure à celle supportée par l'autre roue. Son adhérence sur le sol S est alors accrue, et elle devient prépondérante dans l'effet directeur. Simultanément, sa position avancée vers la boule d'attelage amplifie l'effet du braquage des roues 6a et 6b sur le rappel de la remorque routière 1 dans l'axe du véhicule tracteur 5.

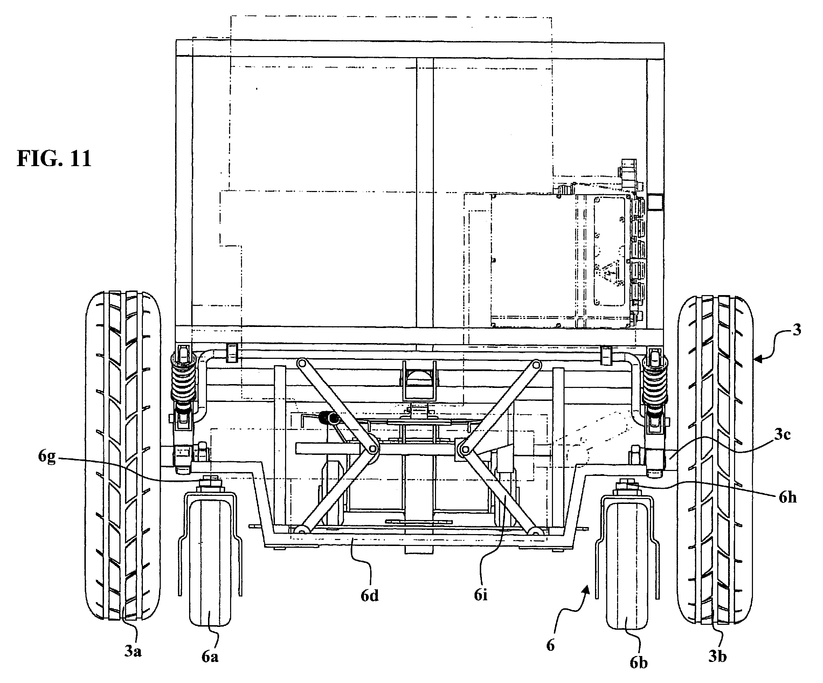

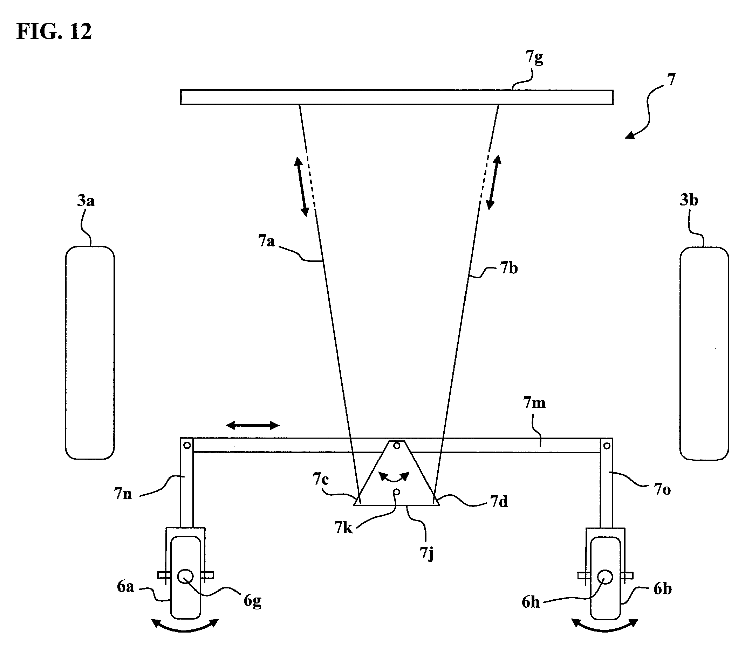

Considérons maintenant le mode de réalisation illustré sur les figures 11 et 12.

Dans ce mode de réalisation, on retrouve la même structure de remorque 1, avec le châssis 2, un dispositif d'attelage fixe sur le châssis 2, un train de roulage principal 3 à deux roues principales 3a et 3b sur un essieu principal 3c à orientation fixe.

On retrouve également un train de roulage secondaire 6, à deux roues secondaires 6a et 6b.

Dans ce cas, les roues secondaires 6a et 6b sont montées orientables individuellement autour d'une cheville ouvrière respective 6g et 6h sur le châssis secondaire 6d. Le châssis secondaire 6d, dans ce cas, n'est pas monté pivotant en direction vis-à-vis du châssis 2. Il est déplaçable vers et à l'écart du châssis 2 par un système de parallélogramme déformable 6i motorisé, entre la position déployée illustrée sur la figure 11, et une position rétractée à l'écart du sol.

Les moyens d'actionnement 7 (figure 12) sont similaires à ceux du mode de réalisation de la figure 1, à savoir des bielles ou câbles 7a et 7b, une traverse 7g. Le fonctionnement est similaire à celui du mode de réalisation de la figure 1. Toutefois, dans ce cas, les extrémités postérieures 7c et 7d des câbles 7a et 7b sont articulées sur une plaque 7j triangulaire rotative autour d'un axe 7k vertical du châssis secondaire 6d. La plaque 7j sollicite une barre transversale de direction 7m reliée par des bielles 7n, 7o aux roues secondaires 6a et 6b.

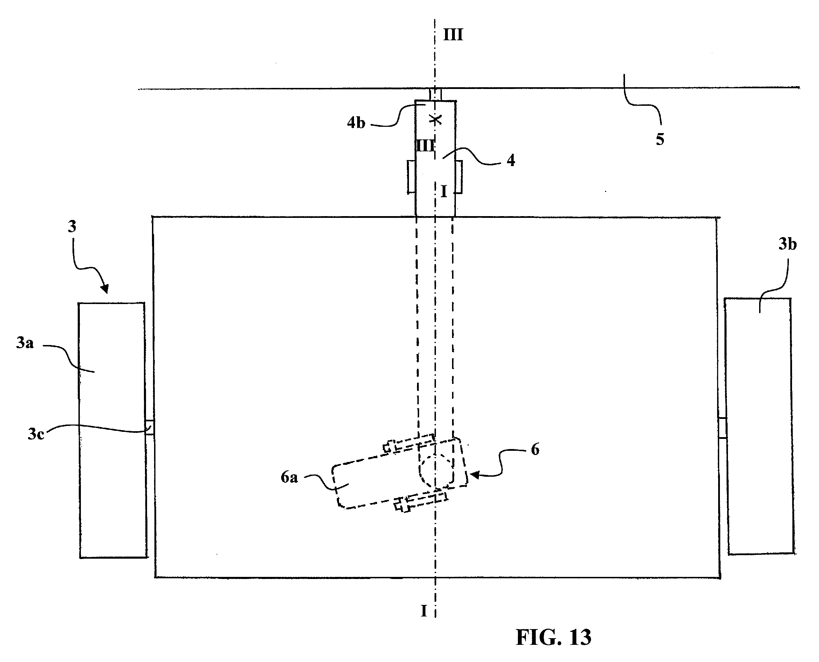

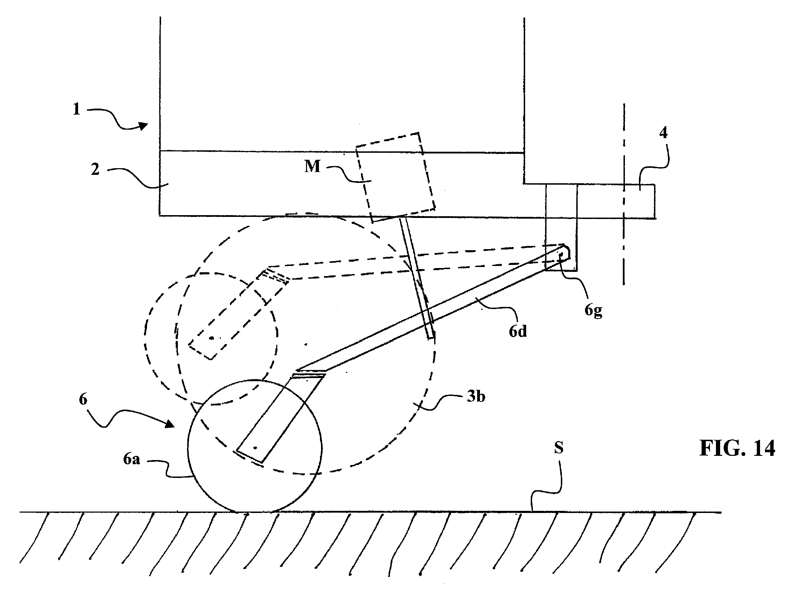

On considère maintenant un autre mode de réalisation illustré sur les figures 13 et 14.

On retrouve une structure de remorque 1 similaire à celle des modes de réalisation précédents, avec un châssis 2, un dispositif d'attelage 4 fixe sur le châssis 2, un train de roulage principal 3 à deux roues principales 3a et 3b coaxiales en bout d'un essieu principal 3c.

En marche avant du véhicule tracteur 5, le dispositif d'attelage 4 est articulé selon son extrémité antérieure 4b sur une boule d'attelage solidaire du véhicule tracteur 5.

On retrouve également un train de roulage secondaire 6, qui peut prendre une position escamotée illustrée en pointillés sur la figure 12, et une position déployée illustrée en traits pleins. En position escamotée, la remorque 1 repose sur le sol S par les roues 3a et 3b du train de roulage principal 3. En position déployée, la remorque 1 repose sur le sol S par les roues du train de roulage secondaire 6.

Dans ce mode de réalisation, on prévoit des moyens différents pour orienter en direction le train de roulage secondaire 6 : d'une part le dispositif d'attelage 4 comprend des moyens pour limiter l'écart angulaire entre la direction longitudinale I-I de la remorque et la direction longitudinale III-III du véhicule tracteur 5 ; d'autre part, le train de roulage secondaire 6 est constitué d'une (ou plusieurs) roues folles en direction telles que la roue 6a, comme les roues d'un chariot de supermarché.

La roue folle en direction 6a est montée en bout d'un châssis secondaire 6d formé d'une poutre elle-même articulée selon un axe transversal antérieur 6g sur le châssis 2. Un moteur M commande l'inclinaison de la poutre du châssis secondaire 6d pour déplacer le train de roulage secondaire 6 entre les positions escamotée et déployée.

En pratique, les moyens limitant l'écart angulaire entre l'axe I-I de la remorque et l'axe III-III du véhicule tracteur 5 peuvent comprendre un ou plusieurs mors de serrage aptes à porter en appui autour de la boule d'attelage prévue sur le véhicule tracteur 5. En position de marche vers l'avant, les mors de serrage sont desserrés, afin que le dispositif d'attelage 4 soit librement articulé sur la boule d'attelage, donnant à la remorque 1 un comportement routier normal et habituel. En position de marche arrière, les mors sont serrés, de façon à maintenir le dispositif d'attelage 4 selon une orientation sensiblement constante, maintenant un écart angulaire constant entre l'axe I-I de la remorque 1 et l'axe III-III du véhicule tracteur 5. Dans ce cas, en progression vers l'arrière, la roue folle en direction 6a du train de roulage secondaire 6 prend la direction qui convient pour éviter les efforts transversaux entre le sol S et la remorque 1, de sorte que la remorque 1 conserve une orientation constante par rapport à l'orientation du véhicule tracteur 5. L'utilisateur n'a ainsi pas à s'occuper de la remorque.

Dans les modes de réalisation des figures 1 à 12, les moyens d'actionnement 7 pour piloter l'orientation du train de roulage secondaire 6 sont des moyens mécaniques.

En alternative, l'orientation du train de roulage secondaire 6 pourra être effectuée par un moyen de mesure de distance relative entre les deux côtés avant de la remorque 1 et le véhicule tracteur 5. Des capteurs de distance de type radar de recul pour automobile seront par exemple utilisés à cette fin. La rotation du train de roulage secondaire 6 est alors commandée par un moteur électrique ou un vérin. La valeur de consigne est liée au rapport des distances détectées par les capteurs de distance, de telle sorte que l'angle de braquage soit supérieur à l'angle entre l'axe longitudinal I-I de la remorque 1 et l'axe longitudinal III-III du véhicule tracteur 5, comme pour le système de commande mécanique. On pourra si nécessaire adjoindre un régulateur PID avec une valeur de consigne d'égales distances entre les mesures droite et gauche.

Les moyens d'escamotage M, V, 6d qui déplacent sélectivement le train de roulage secondaire 6 vers et à l'écart du sol S peuvent prendre diverses formes, autres que les moteurs M et vis V illustrés sur les figures. On pourra par exemple utiliser un vérin électrique ou hydraulique. Il suffit que ces moyens conduisent sélectivement à la mise en contact du train de roulage secondaire 6 avec le sol S en décollant légèrement les roues 3a et 3b du train principal 3, et conduisent sélectivement à escamoter le train de roulage secondaire 6 pour que la remorque 1 repose clairement par les roues principales 3a et 3b, en marche avant.

L'actionnement des moyens d'escamotage M, V, 6d peut être réalisé manuellement, par manoeuvre d'un contact électrique ou d'une manivelle.

De préférence, l'actionnement des moyens d'escamotage M, V, 6d pourra être automatique, commandé par exemple par la position du levier de vitesses du véhicule tracteur 5. A cet effet, des conducteurs électriques seront prévus pour ramener l'information de position du levier de vitesses vers la commande du moteur M.

En alternative, on pourra récupérer le signal d'allumage des feux de recul sur la prise de remorque.

Selon une autre solution, les modes marche avant et marche arrière peuvent être détectés par un capteur de direction monté sur la remorque 1, sur une roue, par effet Doppler, ou par un dispositif de capteur de mouvement général. Il faudra toutefois prendre soin d'éviter qu'un retard excessif se produise entre le début du recul et le déploiement du train de roulage secondaire 6.

Afin de renforcer la sécurité de fonctionnement et prévenir un déploiement intempestif du train de roulage secondaire 6, on peut combiner deux signaux : un premier signal de feu de recul allumé, ou de levier de vitesses en position marche arrière, d'une part ; et un second signal d'absence de mouvement en marche avant. On descend le train secondaire 6 si et seulement si les deux signaux sont présents.

On peut éventuellement prévoir des moyens de verrouillage, actionnables par l'utilisateur, pouvant verrouiller sélectivement les moyens d'escamotage en une position intermédiaire pour que la remorque routière repose sur ses deux trains de roulage en l'absence de véhicule tracteur.

Une remorque routière 1 selon l'invention peut être utilisée comme remorque de portage de charge, notamment de bagages.

Selon une application particulièrement intéressante, une remorque routière 1 selon l'invention peut comprendre des moyens de génération ou de stockage d'électricité, par exemple une batterie d'accumulateurs ou un moteur thermique 10 couplé à une génératrice 11 (figure 2), connectés au véhicule tracteur 5 de type à propulsion électrique, de façon à alimenter en énergie électrique le véhicule tracteur 5. Cela permet d'accroître sont autonomie.

Autrement dit, le possesseur d'un véhicule tracteur 5 de type à propulsion électrique peut, s'il le souhaite, atteler une remorque 1 à génératrice 11 lorsqu'il doit faire un long trajet. Le dispositif selon l'invention lui permettra de manoeuvrer le véhicule sans difficulté, en marche avant et en marche arrière, sans nécessiter un apprentissage délicat.

La présente invention n'est pas limitée aux modes de réalisation qui ont été explicitement décrits, mais elle en inclut les diverses variantes et généralisations contenues dans le domaine des revendications ci-après.

## Revendications

1. Remorque routière (1) comprenant :
- un châssis (2) de remorque,
- un train de roulage principal (3),
- un dispositif d'attelage (4) fixe pour son accrochage à un véhicule tracteur (5),
- un train de roulage secondaire (6),
- des moyens d'orientation (6e, 7) pour orienter en direction le train de roulage secondaire (6), lorsqu'il repose sur le sol, en fonction d'une trajectoire de recul du véhicule tracteur (5),
**caractérisée en ce que** :
- la remorque routière (1) comprend en outre des moyens d'escamotage (M, V, 6d) pour déplacer sélectivement l'un au moins du train de roulage principal (3) et du train de roulage secondaire (6), entre une première position et une seconde position,
- en première position le train de roulage secondaire (6) est rétracté à l'écart du sol (S) par rapport au train de roulage principal (3) de façon que le train de roulage secondaire (6) reste à l'écart du sol (S) lorsque la remorque repose sur le sol (S) par le train de roulage principal (3),
- en seconde position le train de roulage secondaire (6) est déployé vers le sol (S) au-delà du train de roulage principal (3) de façon que le train de roulage principal (3) reste à l'écart du sol (S) lorsque la remorque repose sur le sol (S) par le train de roulage secondaire,
- les moyens d'orientation (6e, 7) sont agencés de façon à orienter en direction le train de roulage secondaire (6) pour conserver un alignement satisfaisant entre la remorque (1) et le véhicule tracteur (5), en marche arrière.

2. Remorque routière (1) selon la revendication 1, **caractérisée en ce que** le train de roulage principal (3) est à hauteur fixe vis-à-vis du châssis (2), tandis que les moyens d'escamotage (M, V, 6d) sont adaptés pour déplacer le train de roulage secondaire (6) entre une position escamotée vers la partie supérieure du châssis (2), dans laquelle la remorque (1) repose sur le sol (S) par le train de roulage principal (3) tandis que le train de roulage secondaire (6) est à l'écart du sol (S), et une position déployée à l'écart de la partie supérieure du châssis (2), dans laquelle la remorque (1) repose sur le sol (S) par le train de roulage secondaire (6) tandis que le train de roulage principal (3) est à l'écart du sol (S).

3. Remorque routière (1) selon l'une des revendications 1 ou 2, **caractérisée en ce que**, pour orienter en direction le train de roulage secondaire (6) :
- le dispositif d'attelage (4) comprend des moyens limitant l'écart angulaire entre la direction longitudinale (I-I) de la remorque (1) et la direction longitudinale (III-III) du véhicule tracteur (5),
- le train de roulage secondaire (6) est constitué d'une ou plusieurs roues folles en direction (6a), aptes à suivre la direction imprimée à la remorque routière (1) par le dispositif (4) d'attelage accroché au véhicule tracteur (5).

4. Remorque routière (1) selon la revendication 3, **caractérisée en ce que** les moyens limitant l'écart angulaire comprennent un ou plusieurs mors de serrage aptes à porter en appui autour d'une boule d'attelage prévue sur le véhicule tracteur (5).

5. Remorque routière (1) selon la revendication 3, **caractérisée en ce que** les moyens limitant l'écart angulaire comprennent des moyens de verrouillage pour verrouiller sélectivement l'écart angulaire du dispositif d'attelage (4) vis-à-vis du véhicule tracteur (5).

6. Remorque routière (1) selon l'une des revendications 1 ou 2, **caractérisée en ce que**, pour orienter en direction le train de roulage secondaire (6) :
- le train de roulage secondaire (6) est constitué de roues (6a, 6b) orientables en direction,
- des moyens d'actionnement (7) commandent l'orientation des roues (6a, 6b) orientables vis-à-vis du châssis (2) de la remorque routière (1) en fonction de l'écart angulaire (B) entre la direction longitudinale (III-III) du véhicule tracteur (5) et de la direction longitudinale (I-I) de la remorque (1).

7. Remorque routière (1) selon la revendication 6, **caractérisée en ce que** les moyens d'actionnement (7) orientent les roues (6a, 6b) du train de roulage secondaire (6) selon un angle de braquage (A) tendant à ramener la remorque (1) dans l'axe (III-III) du véhicule tracteur (5).

8. Remorque routière (1) selon l'une des revendications 6 ou 7, **caractérisée en ce que** les moyens d'actionnement (7) comprennent des câbles ou bielles (7a, 7b) dont une extrémité antérieure (7e, 7f) est articulée sur le véhicule tracteur (5) et dont une extrémité postérieure (7c, 7d) est articulée sur un support commun orientable (6d) des roues (6a, 6b) du train de roulage secondaire (6).

9. Remorque routière (1) selon l'une des revendications 6 ou 7, **caractérisée en ce que** les moyens d'actionnement comprennent des câbles ou bielles (7a, 7b) dont une extrémité antérieure (7e, 7f) est articulée sur le véhicule tracteur (5) et dont une extrémité postérieure (7c, 7d) est articulée sur une plaque rotative (7j) sollicitant une barre transversale de direction (7m) reliée par des bielles (7n, 7o) aux roues (6a, 6b) du train de roulage secondaire (6).

10. Remorque routière (1) selon l'une quelconque des revendications 1 à 9, **caractérisée en ce que** les moyens d'escamotage comprennent :
- au moins un vérin (M, V) apte à déplacer sélectivement l'un au moins du train de roulage principal (3) et du train de roulage secondaire (6),
- des moyens de commande de vérin, pour actionner le vérin (M, V) et faire reposer la remorque (1) sur le sol (S) par le seul train de roulage secondaire (6) lorsque le véhicule tracteur (5) recule, et pour actionner le vérin (M, V) et faire reposer la remorque (1) sur le sol (S) par le seul train de roulage principal (3) lorsque le véhicule tracteur (5) avance.

11. Remorque routière (1) selon l'une quelconque des revendications 1 à 10, **caractérisée en ce qu'**elle comprend des moyens de verrouillage de train pour verrouiller sélectivement les moyens d'escamotage (M, V, 6d) en une position intermédiaire dans laquelle le train de roulage principal (3) et le train de roulage secondaire (6) sont au même niveau pour supporter simultanément la remorque routière (1) sur le sol, les trains de roulage principal (3) et secondaire (6) étant décalés l'un de l'autre dans la direction longitudinale de la remorque routière (1).

12. Remorque routière (1) selon l'une quelconque des revendications 1 à 11, **caractérisée en ce qu'**elle comprend des moyens de génération ou de stockage d'électricité (10, 11) aptes à être eux-mêmes connectés à un véhicule tracteur (5) à propulsion électrique, pour alimenter en énergie électrique le véhicule tracteur (5) et accroître ainsi son autonomie.

13. Utilisation d'une remorque routière (1) selon l'une quelconque des revendications 1 à 12 avec un véhicule tracteur (5), dans laquelle :
- lorsque le véhicule tracteur (5) est en marche avant, on sollicite les moyens d'escamotage (M, V, 6d) pour placer les trains de roulage principal (3) et secondaire (6) en première position de façon que la remorque routière (1) repose sur le sol (S) par son seul train de roulage principal (3),
- lorsque le véhicule tracteur (5) est en marche arrière, on sollicite les moyens d'escamotage (M, V, 6d) pour placer les trains de roulage principal (3) et secondaire (6) en seconde position de façon que la remorque routière (1) repose sur le sol (S) par son seul train de roulage secondaire (6).

14. Utilisation selon la revendication 13, **caractérisée en ce que** le véhicule tracteur (5) comprend des moyens de propulsion électriques, et la remorque routière (1) comprend des moyens de génération ou de stockage d'électricité (10, 11) connectés au véhicule tracteur (5) et alimentant les moyens de propulsion électriques pour accroître son autonomie.

## Patentansprüche

1. Anhänger (1) eines Kraftfahrzeugs, umfassend:
- einen Anhängerrahmen (2),
- ein Hauptfahrwerk (3),
- eine feste Kupplungsvorrichtung (4) zum Anhängen an ein Zugfahrzeug (5),
- ein sekundäres Fahrwerk (6),
- Schwenkmittel (6e, 7) zum Ausrichten des sekundären Fahrwerks (6) bei seiner Abstützung auf dem Boden in Abhängigkeit von der Rückwärtsfahrrichtung des Zugfahrzeugs (5),
**dadurch gekennzeichnet, dass**
- der Anhänger (1) eines Kraftfahrzeugs außerdem Einzugsmittel (M,V, 6d) zur wahlweisen Verstellung des Hauptfahrwerks (3) und/oder des sekundären Fahrwerks (6) zwischen einer ersten Stellung und einer zweiten Stellung aufweist,
- in der ersten Stellung das sekundäre Fahrwerk (6) relativ zum Hauptfahrwerk (3) vom Boden (S) abgehoben ist, so dass das sekundäre Fahrwerk (6) einen Abstand vom Boden (S) hat, wenn der Anhänger über das Hauptfahrwerk (3) am Boden (S) abgestützt ist,
- in der zweiten Stellung das sekundäre Fahrwerk (6) über das Hauptfahrwerk (3) hinaus zum Boden (S) hin ausgefahren ist, so dass das Hauptfahrwerk (3) einen Abstand vom Boden (S) hat, wenn der Anhänger über das sekundäre Fahrwerk (6) am Boden (S) abgestützt ist,
- die Schwenkmittel (6e, 7) so ausgebildet sind, dass sie das sekundäre Fahrwerk (6) in eine Richtung schwenken, in der beim Zurückfahren der Anhänger (1) zum Zugfahrzeug (5) im wesentlichen fluchtend ausgerichtet ist.

2. Anhänger (1) eines Kraftfahrzeugs nach Anspruch 1, **dadurch gekennzeichnet, dass** sich das Hauptfahrwerk (3) relativ zu dem Rahmen (2) in einer festen Höhe befindet, während die Einzugsmittel (M,V, 6d) so ausgebildet sind, dass sie das sekundäre Fahrwerk (6) zwischen einer zum oberen Teil des Rahmens (2) eingezogenen Position, in der sich der Anhänger (1) über das Hauptfahrwerk (3) auf dem Boden (S) abstützt, während das sekundäre Fahrwerk (6) vom Boden (S) abgehoben ist, und einer mit Abstand vom oberen Teil des Rahmens (2) ausgefahrenen Position verstellbar ist, in der sich der Anhänger (1) über das sekundäre Fahrwerk (6) am Boden (S) abstützt, während das Hauptfahrwerk (3) zum Boden (S) beabstandet ist.

3. Anhänger (1) eines Kraftfahrzeugs nach Anspruch 1 oder 2, **dadurch gekennzeichnet, dass** zum Ausrichten des sekundären Fahrwerks (6) :
- die Kupplungsvorrichtung (4) Mittel zur Begrenzung der Winkelabweichung zwischen der Längsrichtung (I-I) des Anhängers (1) und der Längsrichtung (III-III) des Zugfahrzeugs (5) hat und
- das sekundäre Fahrwerk (6) zusammengesetzt ist aus einem oder mehreren, frei schwenkbaren Rädern (6a) derart, dass sie der Richtung folgen, die dem Anhänger (1) eines Kraftfahrzeugs von der an dem Zugfahrzeug (5) angebrachten Kupplungsvorrichtung (4) aufgeprägt wird.

4. Anhänger (1) eines Kraftfahrzeugs nach Anspruch 3, **dadurch gekennzeichnet, dass** die Mittel zur Begrenzung der Winkelabweichung einen oder mehrere Bremsschuhe haben, die so ausgebildet sind, dass sie einen Anpressdruck an einem Kupplungskopf erzeugen, der an dem Zugfahrzeug (5) vorgesehen ist.

5. Anhänger (1) eines Kraftfahrzeugs nach Anspruch 3, **dadurch gekennzeichnet, dass** die Mittel zur Begrenzung der Winkelabweichung Rastmittel haben, die so ausgebildet sind, dass sie die Winkelabweichung der Kupplungsvorrichtung (4) relativ zu dem Zugfahrzeug (5) nach Wahl verriegeln.

6. Anhänger (1) eines Kraftfahrzeugs nach Anspruch 1 oder 2, **dadurch gekennzeichnet, dass** zum Ausrichten des sekundären Fahrwerks (6) :
- das sekundäre Fahrwerk (6) zusammengesetzt ist aus richtungsmäßig schwenkbaren Rädern (6a, 6b),
- Betätigungsmittel (7) vorgesehen sind, die die Ausrichtung der bezüglich des Rahmens (2) des Anhängers (1) eines Kraftfahrzeugs schwenkbaren Räder (6a, 6b) in Abhängigkeit von der Winkelabweichung (B) zwischen der Längsrichtung (III-III) des Zugfahrzeugs (5) und der Längsrichtung (I-I) des Anhängers (1) steuern.

7. Anhänger (1) eines Kraftfahrzeugs nach Anspruch 6, **dadurch gekennzeichnet, dass** die Betätigungsmittel (7) die Räder (6a, 6b) des sekundären Fahrwerks (6) entsprechend einem Einschlagwinkel (A) schwenken, der bestrebt ist, den Anhänger (1) in die Richtung der Achse (III-III) des Zugfahrzeugs (5) zurückzuführen.

8. Anhänger (1) eines Kraftfahrzeugs nach Anspruch 6 oder 7, **dadurch gekennzeichnet, dass** die Betätigungsmittel (7) Seile oder Koppelstangen (7a, 7b) aufweisen, von denen ein vorderes Ende (7e, 7f) an dem Zugfahrzeug (5) und ein hinteres Ende (7c, 7d) an einem gemeinsamen Schwenksupport (6d) der Räder (6a, 6b) des sekundären Fahrwerks (6) angelenkt sind.

9. Anhänger (1) eines Kraftfahrzeugs nach Anspruch 6 oder 7, **dadurch gekennzeichnet, dass** die Betätigungsmittel Seile oder Koppelstangen (7a, 7b) aufweisen, von denen ein vorderes Ende (7e, 7f) an dem Zugfahrzeug (5) und ein hinteres Ende (7c, 7d) an einer drehbaren Platte (7j) angelenkt sind, die eine Lenktraverse (7m) betätigt, welche über Koppelstangen (7n, 7o) mit den Rädern (6a, 6b) des sekundären Fahrwerks (6) verbunden ist.

10. Anhänger (1) eines Kraftfahrzeugs nach einem der Ansprüche 1 bis 9, **dadurch gekennzeichnet, dass** die Einzugsmittel aufweisen :
- wenigstens einen Stellantrieb (M, V) zur wahlweisen Verstellung des Hauptfahrwerks (3) und/oder des sekundären Fahrwerks (6),
- Antriebsmittel zur Betätigung des Stellantriebs (M, V) und zur Abstützung des Anhängers (1) nur über das sekundäre Fahrwerk (6) auf dem Boden (S), wenn das Zugfahrzeug (5) rückwärts fährt, sowie zur Betätigung des Stellantriebs (M, V) und zur Abstützung des Anhängers (1) nur über das Hauptfahrwerk (3) auf dem Boden (S), wenn das Zugfahrzeug (5) vorwärts fährt.

11. Anhänger (1) eines Kraftfahrzeugs nach einem der Ansprüche 1 bis 10, **dadurch gekennzeichnet, dass** Mittel zur Fahrwerksverriegelung für die wahlweise Verrastung der Einzugsmittel (M, V, 6d) in einer Zwischenstellung vorgesehen sind, in der das Hauptfahrwerk (3) und das sekundäre Fahrwerk (6) auf derselben Höhe liegen, um den Anhänger (1) eines Kraftfahrzeugs gleichzeitig am Boden abzustützen, wobei das Hauptfahrwerk (3) und das sekundäre Fahrwerk (6) in Längsrichtung des Anhängers (1) eines Kraftfahrzeugs zueinander versetzt sind.

12. Anhänger (1) eines Kraftfahrzeugs nach einem der Ansprüche 1 bis 11, **dadurch gekennzeichnet, dass** dieser Mittel zur Erzeugung oder Speicherung von Elektrizität (10, 11) aufweist, die ihrerseits mit einem Zugfahrzeug (5) mit Elektroantrieb verbindbar sind, um das Zugfahrzeug (5) mit elektrischer Energie zu versorgen und dadurch seine Unabhängigkeit zu vergrößern.

13. Verwendung eines Anhänger (1) eines Kraftfahrzeugs nach einem der Ansprüche 1 bis 12 mit einem Zugfahrzeug (5), bei dem
- während der Vorwärtsfahrt des Zugfahrzeugs (5) die Einzugsmittel (M, V, 6d) betätigt werden, um das Hauptfahrwerk (3) und das sekundäre Fahrwerk (6) in die erste Stellung zu versetzen, so dass sich der Anhänger (1) eines Kraftfahrzeugs nur über sein Hauptfahrwerk (3) auf dem Boden (S) abstützt,
- während der Rückwärtsfahrt des Zugfahrzeugs (5) die Einzugsmittel (M, V, 6d) betätigt werden, um das Hauptfahrwerk (3) und das sekundäre Fahrwerk (6) in die zweite Stellung zu versetzen, so dass sich der Anhänger (1) eines Kraftfahrzeugs nur über sein sekundäres Fahrwerk (6) auf dem Boden (S) abstützt.

14. Verwendung nach Anspruch 13, **dadurch gekennzeichnet, dass** das Zugfahrzeug (5) Mittel für den elektrischen Vortrieb und der Anhänger (1) eines Kraftfahrzeugs mit dem Zugfahrzeug (5) verbundene Mittel zur Erzeugung oder Speicherung von Elektrizität (10, 11) aufweisen, die die Mittel für den elektrischen Vortrieb versorgen und dadurch die Unabhängigkeit des Zugfahrzeugs (5) vergrößern.

## Claims

1. Road trailer (1) comprising:
- a trailer chassis (2),
- a main wheelset (3),
- a fixed drawbar device (4) for coupling it to a towing vehicle (5),
- a secondary wheelset (6),
- orientation means (6e, 7) for orienting in direction the secondary wheelset (6), when it is resting on the ground, according to a reversing path of the towing vehicle (5),
**characterized in that** :
- the road trailer (1) further comprises retraction means (M, V, 6d) for selectively moving at least one of the main wheelset (3) and of the secondary wheelset (6), between a first position and a second position,
- in first position, the secondary wheelset (6) is retracted away from the ground (S) with respect to the main wheelset (3) so that the secondary wheelset (6) remains away from the ground (S) when the trailer is resting on the ground (S) via the main wheelset (3),
- in second position the secondary wheelset (6) is deployed toward the ground (S) past the main wheelset (3) so that the main wheelset (3) remains away from the ground (S) when the trailer is resting on the ground (S) via the secondary wheelset,
- the orientation means (6e, 7) are arranged in order to orient in direction the secondary wheelset (6) to maintain a satisfactory alignment between the trailer (1) and the towing vehicle (5), in a reverse gear.

2. Road trailer (1) as claimed in claim 1, **characterized in that** the main wheelset (3) is at a fixed height with respect to the chassis (2), while the retraction means (M, V, 6d) are designed to move the secondary wheelset (6) between a position retracted toward the upper part of the chassis (2), in which position the trailer (1) rests on the ground (S) via the main wheelset (3) whereas the secondary wheelset (6) is away from the ground (S), and a position deployed away from the upper part of the chassis (2), in which position the trailer (1) rests on the ground (S) via the secondary wheelset (6) whereas the main wheelset (3) is away from the ground (S).

3. Road trailer (1) as claimed in one of claims 1 and 2, **characterized in that**, in order to orient the direction of the secondary wheelset (6):
- the drawbar device (4) comprises means that limit the angular deviation between the longitudinal direction (I-I) of the trailer (1) and the longitudinal direction (III-III) of the towing vehicle (5),
- the secondary wheelset (6) is made up of one or more self-orienting wheels (6a) able to follow the direction imparted to the road trailer (1) by the drawbar device (4) attached to the towing vehicle (5).

4. Road trailer (1) as claimed in claim 3, **characterized in that** the means that limit the angular deviation comprise one or more clamping jaws able to press around a towing ball provided on the towing vehicle (5).

5. Road trailer (1) as claimed in claim 3, **characterized in that** the means that limit the angular deviation comprise locking means for selectively locking the angular deviation of the drawbar device (4) with respect to the towing vehicle (5).

6. Road trailer (1) as claimed in one of claims 1 and 2, **characterized in that**, in order to orient the direction of the secondary wheelset (6):
- the secondary wheelset (6) is made up of wheels (6a, 6b) the direction of which can be oriented,
- actuating means (7) control the orientation of the orientable wheels (6a, 6b) with respect to the chassis (2) of the road trailer (1) as a function of the angular deviation (B) between the longitudinal direction (III-III) of the towing vehicle (5) and of the longitudinal direction (I-I) of the trailer (1).

7. Road trailer (1) as claimed in claim 6, **characterized in that** the actuating means (7) orient the wheels (6a, 6b) of the secondary wheelset (6) at a steering angle (A) that tends to bring the trailer (1) back into line with the axis (III-III) of the towing vehicle (5).

8. Road trailer (1) as claimed in one of claims 6 and 7, **characterized in that** the actuating means (7) comprise cables or link rods (7a, 7b) a front end (7e, 7f) of which is articulated to the towing vehicle (5) and a rear end (7c, 7d) of which is articulated to a common orientable support (6d) for the wheels (6a, 6b) of the secondary wheelset (6).

9. Road trailer (1) as claimed in one of claims 6 and 7, **characterized in that** the actuating means comprise cables or link rods (7a, 7b) of which a front end (7e, 7f) is articulated to the towing vehicle (5) and of which a rear end (7c, 7d) is articulated to a rotary plate (7j) operating a transverse steering arm (7m) connected by link rods (7n, 7o) to the wheels (6a, 6b) of the secondary wheelset (6).

10. Road trailer (1) as claimed in any one of claims 1 to 9, **characterized in that** the retraction means comprise:
- at least one actuator (M, V) able selectively to move at least one out of the main wheelset (3) and the secondary wheelset (6),
- actuator control means for actuating the actuator (M, V) and causing the trailer (1) to rest on the ground (S) via the secondary wheelset (6) alone when the towing vehicle (5) is reversing, and for actuating the actuator (M, V) and causing the trailer (1) to rest on the ground (S) by the main wheelset (3) alone when the towing vehicle (5) is moving forward.

11. Road trailer (1) as claimed in any one of claims 1 to 10, **characterized in that** it comprises wheelset locking means for selectively locking the retraction means (M, V, 6d) in an intermediate position in which the main wheelset (3) and the secondary wheelset (6) are at the same level so that they simultaneously support the road trailer (1) on the ground, the main (3) and secondary (6) wheelsets being offset from one another in the longitudinal direction of the road trailer (1).

12. Road trailer (1) as claimed in any one of claims 1 to 11, **characterized in that** it comprises electricity generation or storage means (10, 11) able themselves to be connected to an electrically powered towing vehicle (5) so as to supply the towing vehicle (5) with electrical energy thus increasing the range thereof.

13. Use of a road trailer (1) as claimed in any one of claims 1 to 12 with a towing vehicle (5), in which use:
- when the towing vehicle (5) is moving forward, the retraction means (M, V, 6d) are operated in order to place the main (3) and secondary (6) wheelsets in the first position so that the road trailer (1) rests on the ground (S) via its main wheelset (3) alone,
- when the towing vehicle (5) is reversing, the retraction means (M, V, 6d) are operated in such a way as to place the main (3) and secondary (6) wheelsets in a second position so that the road trailer (1) rests on the ground (S) via its secondary wheelset (6) alone.

14. Use as claimed in claim 13, **characterized in that** the towing vehicle (5) comprises electrical propulsion means and the road trailer (1) comprises electricity generation or storage means (10, 11) connected to the towing vehicle (5) and powering the electric propulsion means in order to increase the range of said vehicle.
